# FASCICULE DE BREVET EUROPEEN

(11) **EP 2 545 830 B1**
(45) Date de publication et mention de la délivrance du brevet: **17.09.2014**
(21) Numéro de dépôt: 12174852.9
(22) Date de dépôt: 03.07.2012
(51) Int. Cl.: A47J 43/07, A47J 43/044

(54) **Appareil électroménager de préparation culinaire avec dispositif de remplissage**
Küchengerät mit Nachfüllvorrichtung
Kitchen appliance with refilling device

(30) Priorité: 13.07.2011 FR 1156438
(43) Date de publication de la demande: 16.01.2013
(73) Titulaire: SEB S.A., 69130 Ecully (FR)
(72) Inventeur: Perrier, Matthieu, 26000 Valence (FR); Bourgeois-Jacquet, Jean-Marie, 21850 Saint-Apollinaire (FR)
(74) Mandataire: Cémeli, Eric Philippe Laurent

(56) Documents cités:
- EP-A1- 1 050 261
- CN-Y- 2 540 148
- US-B1- 6 345 572

## Description

La présente invention se rapporte au domaine technique des appareils électroménagers de préparation culinaire prévus pour la réalisation de préparations liquides.

La présente invention concerne notamment, mais non exclusivement, les appareils de fabrication de lait de soja et/ou de soupe.

De nombreuses machines existantes pour fabriquer du lait de soja ou de la soupe à partir de légumes et/ou de céréales présentent des inconvénients parmi lesquels un volume du bol surdimensionné, du fait qu'une motorisation lourde et encombrante est disposée sur le bol, ce qui ne facilite pas la manipulation de l'appareil.

Le document CN201312762U divulgue un appareil à lait de soja comportant un outil rotatif monté dans un couvercle technique disposé sur un bol reposant sur la base d'un boîtier. Un inconvénient de cette réalisation provient du fait qu'il est nécessaire de manipuler le boîtier moteur, voire le couvercle technique, pour pouvoir ajouter des ingrédients dans le bol.

Un appareil selon le préambule de la revendication 1 est connu du document EP1050261.

Ainsi, le but de l'invention est de fournir une solution améliorée de fabrication de préparations culinaires liquides, notamment de lait de soja ou de soupe.

Plus précisément, l'invention cherche à définir un appareil électroménager de préparation culinaire prévu pour la réalisation de préparations culinaires liquides atteignant tout ou partie des objets suivants :
- un bol peu encombrant et facile à manipuler, notamment à remplir ;
- une filtration efficace et automatique ;
- un dispositif chauffant performant ;
- un dispositif démontable, facile à nettoyer.

A cet effet, l'invention repose sur un appareil électroménager de préparation culinaire prévu pour la réalisation de préparations liquides, notamment pour la fabrication de lait de soja et/ou de soupe, comprenant un bol disposé de manière amovible dans un socle, le bol étant recouvert par un couvercle technique portant un axe pour le maintien et l'actionnement d'un outil apte à agir sur un mélange positionné au sein du bol, le couvercle technique présentant un deuxième dispositif d'accouplement relié à l'axe et prévu pour être entraîné par un premier dispositif d'accouplement agencé dans le socle, dans lequel le couvercle technique comprend au moins un orifice de remplissage accessible lorsque le bol portant le couvercle technique est en place dans le socledu fait que l'orifice de remplissage est en vis-à-vis avec une ouverture aménagée dans une branche supérieure du socle, pour permettre le remplissage du bol et/ou une évacuation de vapeurs. Cette disposition permet par exemple d'utiliser la branche supérieure pour réaliser un entonnoir. Cette disposition permet d'obtenir un appareil comportant une enceinte de préparation d'aliments simple à nettoyer, et qui présente une utilisation particulièrement facile. L'utilisateur peut ajouter des ingrédients après la mise en place du bol dans le socle, sans devoir manipuler le socle ou l'enceinte de préparation d'aliments.

Avantageusement encore, le couvercle technique comprend un second orifice de remplissage. Cette disposition permet si désiré de spécialiser les orifices de remplissage par type d'ingrédient.

Avantageusement encore, le couvercle technique porte un filtre dans lequel s'étend l'outil. Cette disposition convient notamment pour la réalisation de lait de soja.

Avantageusement alors, au moins un des orifices de remplissage du couvercle technique permet de remplir le filtre. Cette disposition convient notamment pour la réalisation de lait de soja.

Avantageusement encore, l'axe est décentré par rapport au centre du bol. Cette disposition permet de faciliter l'implantation du ou des orifice(s) de remplissage.

Avantageusement encore, le bol est en matériau métallique, comme de l'acier inoxydable, ou le bol comprend un matériau métallique et un fond diffuseur comme un fond en aluminium. Cette disposition permet d'envisager le chauffage ou le réchauffage de la préparation avec un bol placé sur une plaque chauffante, agencée si désirée dans le socle. Cette disposition contribue à faciliter le nettoyage de l'appareil.

Selon un mode de réalisation, le socle comprend une base pour recevoir le bol, une colonne latérale et une branche supérieure pour venir au-dessus du bol. Les moyens d'entraînement de l'outil ne sont pas nécessairement agencés dans la branche supérieure.

Avantageusement alors, le socle comprend une partie supérieure mobile en translation verticale par rapport à une partie inférieure, de sorte de pouvoir occuper une configuration rehaussée, dans laquelle le bol peut être inséré ou retiré, et une configuration de fonctionnement.

Avantageusement encore, l'appareil comprend un dispositif chauffant disposé dans la base du socle ou fixé au couvercle technique disposé au-dessus du bol. Ces dispositions permettent d'utiliser un bol dépourvu de moyens de chauffe intégrés.

Ces objets, caractéristiques et avantages de la présente invention seront exposés en détail dans la description suivante d'un mode de réalisation particulier fait à titre non-limitatif en relation avec les figures jointes parmi lesquelles :
- La figure 1 représente une vue en perspective d'un appareil électroménager de préparation culinaire prévu pour la réalisation de préparations liquides, notamment pour la fabrication de lait de soja et/ou de soupe, en configuration de fonctionnement, selon un mode de réalisation de l'invention,
- La figure 2 représente une vue de côté de l'appareil illustré sur la figure 1 en configuration rehaussée, le bol étant représenté en transparence,
- La figure 3 représente une vue en perspective de l'appareil illustré sur les figures 1 et 2 démonté,
- La figure 4 représente une vue en perspective avec transparence de l'appareil illustré sur les figures 1 à 3 en configuration rehaussée,
- La figure 5 représente une vue schématique de dessus du bol de l'appareil illustré sur les figures 1 à 4,
- La figure 6 représente une vue de côté en coupe du bol de l'appareil illustré sur les figures 1 à 4,
- La figure 7 représente une vue en perspective démontée d'une variante de réalisation de l'appareil illustré sur les figures 1 à 4.

Un mode de réalisation d'un appareil électroménager de préparation culinaire prévu pour la réalisation de préparations liquides, notamment pour la fabrication de lait de soja et/ou de soupe va maintenant être décrit.

Dans les figures, l'axe x sera utilisé pour désigner une direction longitudinale horizontale, orientée dans la longueur du bol de l'appareil, l'axe y désignera l'axe horizontal transversal, perpendiculaire à l'axe x, et l'axe z désignera la direction verticale, orientée vers le haut.

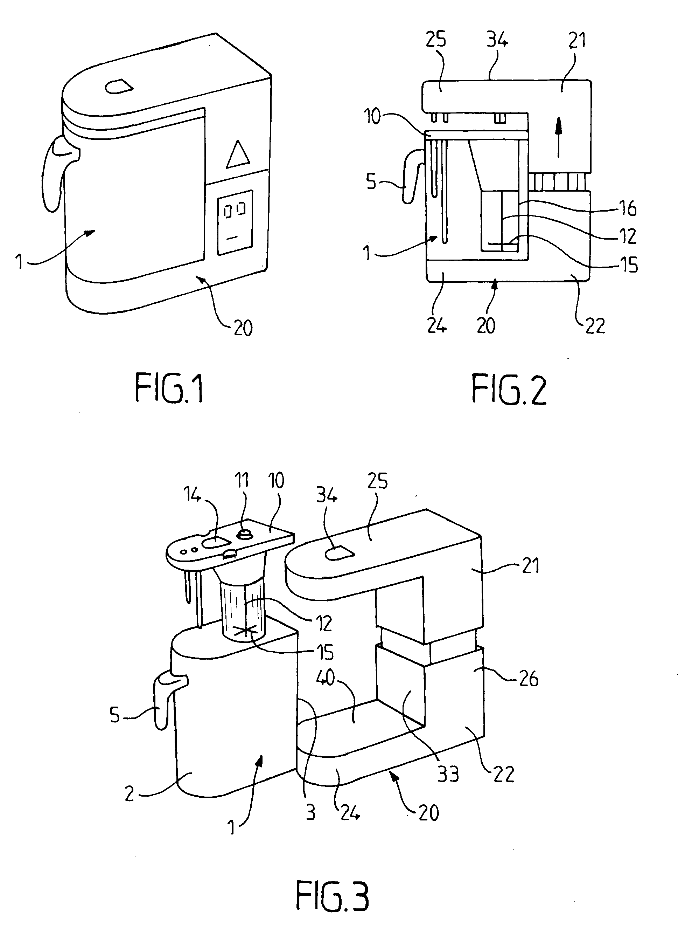

La figure 1 représente une vue en perspective de côté de l'appareil en configuration de fonctionnement. Cet appareil comprend un bol 1 disposé de manière amovible dans un socle 20.

La figure 2 représente une configuration intermédiaire de l'appareil, dans laquelle une partie supérieure 21 du socle 20 est soulevée par rapport à une partie inférieure 22 du socle 20 de sorte de pouvoir libérer le bol 1 qui peut être inséré ou retiré. Nous appellerons par la suite « configuration rehaussée » cette configuration intermédiaire du socle 20. Le bol 1 est recouvert par un couvercle technique 10 amovible portant un axe 12 pour le maintien et l'actionnement d'un outil 15 apte à agir sur un mélange positionné au sein du bol 1. De plus le couvercle technique 10 porte un filtre 16 dans lequel s'étend l'outil 15.

La figure 3 représente schématiquement une configuration démontée de l'appareil. Le bol 1 est retiré du socle 20, resté en configuration rehaussée. D'autre part, le couvercle technique 10, disposé de manière amovible sur la partie haute du bol 1, est retiré par le haut du bol 1. Le socle 20 comprend une base 40 pour recevoir le bol 1, une colonne latérale 26 et une branche supérieure 25 pour venir au-dessus du bol 1.

Les différents composants de l'appareil selon le mode de réalisation vont maintenant être décrits plus en détail.

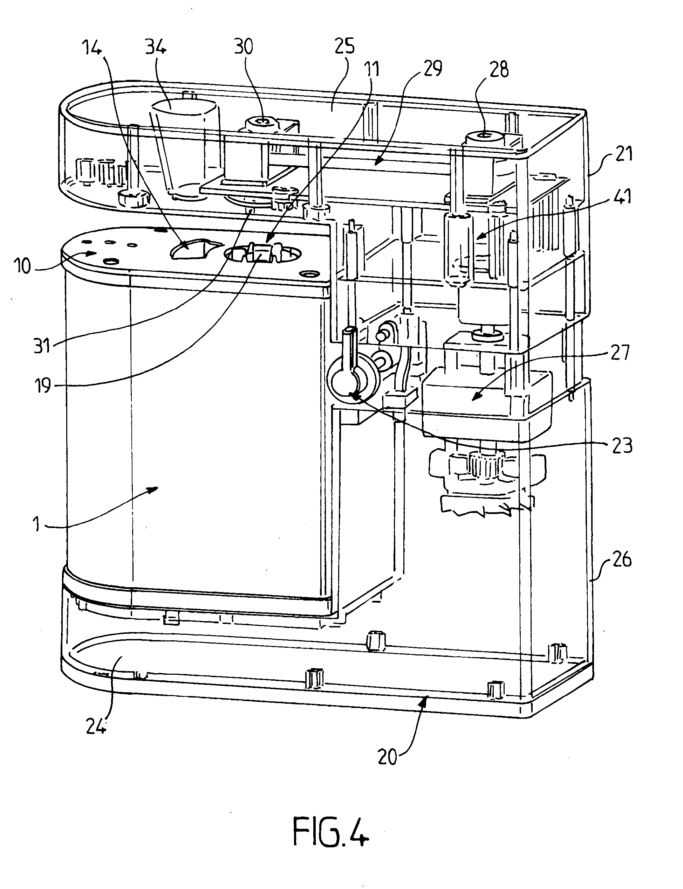

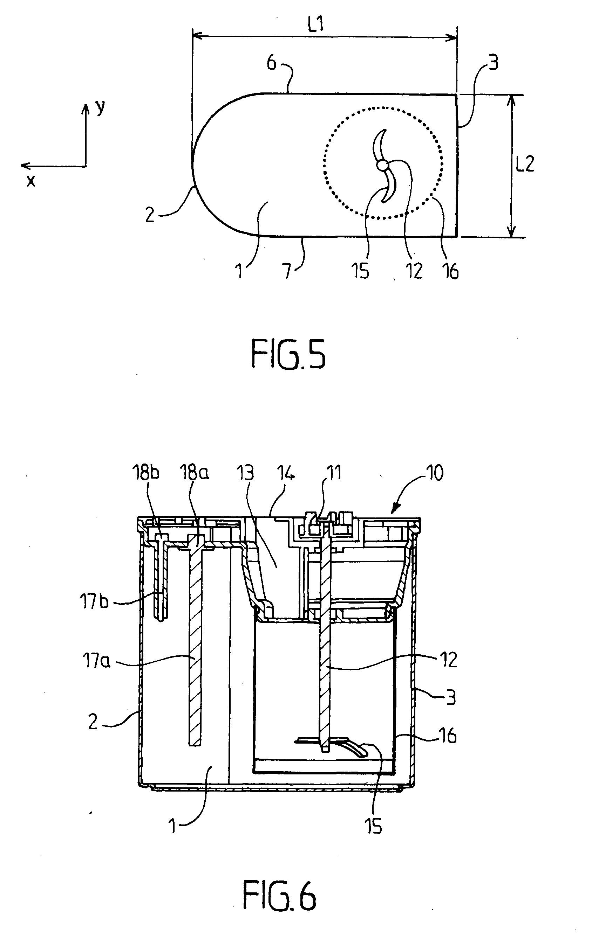

La figure 4 montre ainsi plus précisément les différents éléments qui composent le socle 20 de l'appareil alors que la figure 6 illustre les éléments composant le bol 1 et son couvercle technique 10. Ce socle 20 présente une forme en U basculé, dont une branche inférieure 24 forme la base 40 de réception du bol 1 et la branche supérieure 25 forme un élément apte à coopérer avec le couvercle technique 10 en configuration de fonctionnement de l'appareil, comme cela sera précisé par la suite. Ces deux branches 24, 25 sont reliées par la colonne latérale 26, de section rectangulaire, qui s'étend verticalement contre une paroi latérale 3 du bol, lui servant de butée lorsque le bol 1 est dans son positionnement de fonctionnement. De plus, comme cela a été décrit ci-dessus, la partie supérieure 21 du socle 20, qui comprend la branche supérieure 25 et sensiblement la moitié supérieure de la colonne latérale 26, est mobile en translation verticale par rapport à la partie inférieure 22 du socle 20, qui comprend la base 40 et sensiblement la moitié inférieure de la colonne latérale 26, par l'intermédiaire d'un bouton d'actionnement manuel 23 dont une surface de came vient en appui contre une surface correspondante de la partie supérieure 21 du socle 20 pour mettre en oeuvre son mouvement de translation verticale. La figure 4 représente la configuration rehaussée de ce socle 20, dans laquelle la partie supérieure 21 occupe une position haute. Dans la configuration rehaussée du socle 20 le bol 1 peut être inséré ou retiré.

Selon ce mode de réalisation, la base 40 du socle 20 comprend un dispositif chauffant, non représenté sur les figures, qui permet de chauffer la préparation présente dans le bol 1.

De plus, le socle 20 comporte un dispositif d'entraînement destiné à l'actionnement de l'outil 15 au sein du bol 1, comme cela sera précisé par la suite. Le dispositif d'entraînement comprend un moteur 27 agencé dans la colonne latérale 26, plus particulièrement dans la partie supérieure 21 mobile du socle 20. A cet effet, le socle 20 comprend un agencement de liaison qui permet de relier le moteur 27 à l'axe 12 vertical du couvercle technique 10 s'étendant dans le bol 1. L'agencement de liaison comprend ainsi un premier axe de transmission 28 vertical entraîné par le moteur 27 par l'intermédiaire d'un dispositif de transmission 41. Le premier axe de transmission 28 est relié par une courroie de transmission 29 à un second axe de transmission 30 vertical comprenant dans sa partie inférieure un premier dispositif d'accouplement 31 apte à coopérer avec un deuxième dispositif d'accouplement 11 correspondant de l'axe 12, disposé dans une ouverture du couvercle technique 10. Le couvercle technique 10 présente ainsi le deuxième dispositif d'accouplement 11 relié à l'axe 12 et prévu pour être entraîné par le premier dispositif d'accouplement 31 agencé dans le socle 20. Dans la configuration rehaussée du socle 20 telle que représentée, les premier et deuxième dispositifs d'accouplement 31, 11 ne sont pas accouplés. Lorsque la partie supérieure 21 du socle 20 est abaissée vers la configuration de fonctionnement, les deux premier et deuxième dispositifs d'accouplement 31, 11 viennent automatiquement s'accoupler. Le fonctionnement du moteur 27 agencé au sein du socle 20 permet ainsi la mise en rotation du premier axe de transmission 28, qui entraîne la rotation du second axe de transmission 30 par l'intermédiaire de la courroie de transmission 29, qui entraîne la rotation de l'axe 12 présent dans le couvercle technique 10 par les premier et deuxième dispositifs d'accouplement 31, 11 lorsque l'appareil est en configuration de fonctionnement.

En remarque, l'axe 12 du couvercle technique 10 est décentré par rapport au bol, comme cela sera détaillé par la suite, de manière à réduire au maximum la longueur de la courroie de transmission 29. Cette caractéristique permet de plus de libérer un espace sur la surface du couvercle technique 10, qui est exploité par un dispositif de remplissage du couvercle technique 10, qui repose sur un orifice de remplissage 14 disposé dans la surface supérieure du couvercle technique 10, qui est en vis-à-vis d'une ouverture 34 de forme sensiblement conique aménagée dans la branche supérieure 25 du socle 20. Ce dispositif de remplissage permet de remplir directement le filtre 16 entourant l'outil 15 rotatif du couvercle technique 10 en configuration de fonctionnement de l'appareil. Il permet d'alimenter l'appareil en eau, en graines, et/ou en légumes en cours de cuisson. En variante ou complément, il permet d'évacuer les éventuelles vapeurs du bol 1 vers l'extérieur. Ainsi l'orifice de remplissage 14 est en vis-à-vis avec l'ouverture 34 aménagée dans la branche supérieure 25 du socle 20, pour permettre le remplissage du bol 1 et/ou une évacuation de vapeurs.

La colonne 26 comprend de plus un volume suffisant dans sa partie inférieure pour disposer une carte électronique, non représentée, comprenant les composants électroniques utilisés pour le fonctionnement de l'appareil, qui peut en effet comprendre différents programmes de fonctionnement et contrôles, interfaces homme machine, mis en oeuvre par des moyens matériels (hardware) et/ou logiciels (software).

Selon une variante de réalisation non représentée, la branche supérieure 25 du socle 20 et le couvercle technique 10 peuvent comprendre au moins une seconde ouverture et un second orifice de remplissage dans leur partie avant pour permettre le remplissage direct du bol 1, par exemple par de l'eau. Dans une telle variante, il est aussi possible d'alimenter le bol avec des légumes qui ne doivent pas être mixés. Selon une autre variante de réalisation non représentée, la branche supérieure 25 ne s'étend pas nécessairement jusqu'au(x) orifice(s) de remplissage 14. Ainsi le couvercle technique 10 comprend au moins un orifice de remplissage 14 accessible lorsque le bol 1 portant le couvercle technique 10 est en place dans le socle 20. Avantageusement, au moins un des orifices de remplissage 14 du couvercle technique 10 permet de remplir le filtre 16.

Le filtre 16 utilisé notamment pour la préparation de lait de soja est avantageusement amovible et peut être remplacé si désiré par un simple déviateur de flux tel que par exemple décrit dans le document EP1836905, pour la préparation de lait de soja, ou encore pour la préparation de soupe. A titre de variante, l'appareil ne comporte pas nécessairement un filtre 16.

La figure 5 représente schématiquement le bol 1 en vue de dessus. Sa section présente une forme allongée, c'est-à-dire que sa longueur L1 mesurée dans la direction longitudinale x est plus grande que sa largeur L2 mesurée dans la direction transversale y. D'autre part, le bol 1 présente une forme allongée entre une première paroi 2 la plus éloignée de l'axe 12 et une seconde paroi 3 plus proche de l'axe 12. La première paroi 2 est arrondie, par exemple semi-circulaire. La seconde paroi 3 est plane ou sensiblement plane. La seconde paroi 3 vient en butée contre une paroi plane correspondante 33 du socle 20 en position de fonctionnement. Le bol 1 présente des parois latérales 6, 7 avantageusement parallèles entre elles et perpendiculaires à la seconde paroi 3. Une poignée 5 est liée à la première paroi 2 formant la face avant du bol 1, pour faciliter sa manipulation. Le bol 1 peut être en matériau métallique, par exemple en acier inoxydable, et peut comporter un fond diffuseur, par exemple en aluminium.

En remarque, la forme allongée de ce bol est avantageuse puisqu'elle permet son positionnement dans le rangement d'une porte de réfrigérateur par exemple. Pour cela, la largeur L2 du bol est avantageusement inférieure ou égale à 12 cm, et de préférence inférieure ou égale à 10 cm. De plus, comme le bol 1 est entièrement dissociable de tous les autres composants de l'appareil, il est parfaitement adapté pour une manipulation conviviale, légère, peu encombrante et représente une solution idéale pour le stockage du produit fabriqué obtenu suite au fonctionnement de l'appareil. Son faible encombrement est aussi avantageux pour son logement et utilisation sur un plan de travail, et le rend compatible avec des cuisines étroites. En remarque, le socle 20 présente une forme correspondant à celle du bol 1, et notamment une largeur équivalente, ce qui rend l'ensemble de l'appareil peu encombrant, compatible avec les cuisines de petite taille. Le fait que le moteur 27 soit positionné latéralement permet d'éviter un encombrement important dans une direction verticale.

Naturellement, le bol peut présenter d'autres formes allongées sans sortir du cadre de l'invention. Notamment, tout rapport entre sa largeur L2 et sa longueur L1 inférieur à 0,75 est avantageux. Ce rapport sera ainsi avantageusement choisi entre 0,33 et 0,75, et de préférence entre 0,4 et 0,66. La première paroi 2 du bol 1 la plus éloignée de l'outil 15 est avantageusement arrondie.

Le positionnement de l'axe 12 de l'outil 15, lié au couvercle technique 10, est aussi illustré sur cette figure 5. Il apparaît que cet axe 12 est décentré par rapport au centre C du bol 1 positionné à égale distance des deux parois 2, 3. En effet, cet axe 12 est plus rapproché de la surface arrière du bol 1, et donc de la colonne 26 et du moteur 27, comme mentionné précédemment. En remarque, cette configuration permet un positionnement de l'outil 15 à proximité de la deuxième paroi 3 plane du bol 1, ce qui est favorable à la trajectoire du mélange lors de la rotation de l'outil 15 et permet d'atteindre une performance importante. Plus précisément, le rapprochement de l'outil des trois parois 3, 6, 7 en zone arrière du bol 1 permet de créer des turbulences lors de l'écoulement de produit qu'il provoque, qui favorisent la préparation recherchée. Selon une réalisation avantageuse, ce décentrage permet à l'outil 15 rotatif de laisser libre au moins un tiers de la longueur du bol 1, voire même la moitié de cette longueur.

Le bol 1 et son couvercle technique 10 amovible sont plus particulièrement représentés par la figure 6. Cette dernière montre en coupe les différents éléments du couvercle technique 10 présents au sein du volume du bol 1 lors du fonctionnement de l'appareil. On distingue donc l'axe de rotation 12 qui s'étend sensiblement sur toute la hauteur du bol 1 pour localiser l'outil 15, qui est un couteau pour broyer le soja ou tout légume dans cette réalisation, vers la surface inférieure du bol 1. Cet axe 12 comprend un dispositif d'accouplement 11 dans sa partie supérieure, comme cela a été explicité précédemment. Ensuite, l'orfice de remplissage 14 du couvercle technique 10 permet l'accès au filtre 16 par une conduite de remplissage 13 débouchant dans le bol 1. Cela permet le remplissage du soja dans le filtre 16 de cet appareil. Ce filtre 16 comprend une paroi avec des petites ouvertures, de dimensions prévues pour laisser s'échapper le lait de soja lorsqu'il a été formé par le travail de l'outil 15. En remarque, le couvercle technique 10 comprend de plus deux sondes 17a, 17b prévues pour remplir des fonctions de sécurité, respectivement pour détecter une absence d'eau dans le bol 1 et pour détecter la formation de mousse. Ces deux sondes 17a, 17b comprennent des connecteurs électriques 18a, 18b dans leur partie supérieure, au niveau de la surface supérieure du couvercle technique 10. Cette construction présente l'avantage de permettre le retrait de l'ensemble des éléments fonctionnels qui sont présents à l'intérieur du bol 1 pendant la fabrication du lait de soja, par le simple retrait du couvercle technique 10. Tous ces éléments sont ensuite dissociables et peuvent être aisément lavés, simplement par l'intermédiaire d'un lave-vaisselle par exemple.

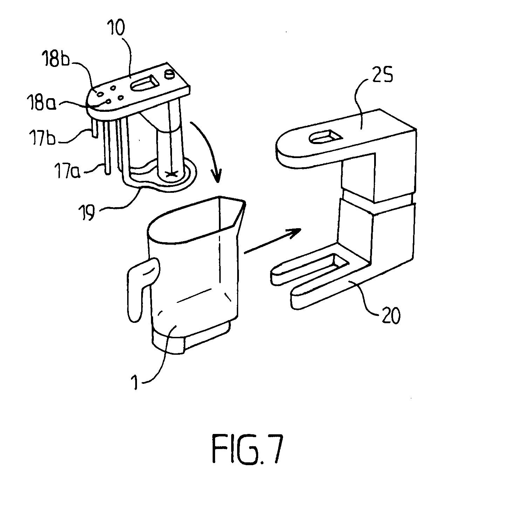

La figure 7 représente une variante de réalisation, dans laquelle le dispositif chauffant n'est plus présent dans la base 40 du socle 20, dont la forme est simplifiée et ne comporte plus que des éléments de guidage latéraux. Dans cette variante, le dispositif chauffant est obtenu par une résistance chauffante 19 fixée au couvercle technique 10 et s'étendant au sein du bol 1. Cette résistance chauffante 19 présente une connexion électrique sur la surface supérieure du couvercle technique 10, apte à une liaison électrique automatique avec la branche supérieure 25 du socle 20 en configuration de fonctionnement.

Le fonctionnement de l'appareil ainsi décrit est très convivial. En effet, le bol est indépendant de tous les autres composants de l'appareil et présente une forme et un volume avantageux, comme cela a été explicité précédemment. Il permet d'éviter un contact permanent de la préparation avec des composants techniques de l'appareil, ce qui favorise la conservation et le stockage de cette préparation dans le bol 1. De plus, la forme du bol le rend compatible avec son utilisation au sein d'un réfrigérateur conventionnel.

Le bol 1 est prévu pour son logement dans un socle, dont un léger mouvement vers le bas permet d'obtenir automatiquement et simultanément la connexion mécanique de l'axe de rotation de l'outil de l'appareil, ainsi que des connexions électriques, ainsi que la formation d'une ou plusieurs conduite(s) de remplissage.

Les éléments techniques qui viennent en contact avec la préparation pendant le fonctionnement de l'appareil sont tous montés de manière amovible par rapport au socle, ce qui permet aisément leur retrait pour les laver efficacement. De plus, le couvercle technique portant l'outil rotatif est indépendant de la motorisation, qui est agencée dans un boîtier distinct du couvercle technique, ce qui facilite grandement le nettoyage des parties de l'appareil en contact avec les aliments. Le boîtier logeant le moteur ne vient plus en contact avec la préparation, ce qui est très positif car son nettoyage est délicat. D'autre part, son déplacement au niveau latéral est avantageux, comme cela a été mentionné précédemment.

En remarque, l'invention ne se limite naturellement pas au mode de réalisation décrit précédemment et de nombreuses variantes peuvent être imaginées (comme un agencement de liaison différent entre le moteur et l'axe du bol, une variante simplifiée sans dispositif de chauffage, un couvercle technique non amovible, etc.), sans pourtant sortir du cadre des revendications.

## Revendications

1. Appareil électroménager de préparation culinaire prévu pour la réalisation de préparations liquides, notamment pour la fabrication de lait de soja et/ou de soupe, comprenant un bol (1) disposé de manière amovible dans un socle (20), le bol (1) étant recouvert par un couvercle technique (10) portant un axe (12) pour le maintien et l'actionnement d'un outil (15) apte à agir sur un mélange positionné au sein du bol (1), le couvercle technique (10) présentant un deuxième dispositif d'accouplement (11) relié à l'axe (12) et prévu pour être entraîné par un premier dispositif d'accouplement (31) agencé dans le socle (20), le couvercle technique (10) comprenant au moins un orifice de remplissage (14) accessible lorsque le bol (1) portant le couvercle technique (10) est en place dans le socle (20), **caractérisé en ce que** l'orifice de remplissage (14) est en vis-à-vis avec une ouverture (34) aménagée dans une branche supérieure (25) du socle (20), pour permettre le remplissage du bol (1) et/ou une évacuation de vapeurs.

2. Appareil électroménager de préparation culinaire selon la revendication 1, **caractérisé en ce que** le couvercle technique (10) comprend un second orifice de remplissage.

3. Appareil électroménager de préparation culinaire selon l'une des revendications 1 ou 2, **caractérisé en ce que** le couvercle technique (10) porte un filtre (16) dans lequel s'étend l'outil (15).

4. Appareil électroménager de préparation culinaire selon la revendication 3, **caractérisé en ce qu'**au moins un des orifices de remplissage (14) du couvercle technique (10) permet de remplir le filtre (16).

5. Appareil électroménager de préparation culinaire selon l'une des revendications 1 à 4, **caractérisé en ce que** l'axe (12) est décentré par rapport au centre (C) du bol (1).

6. Appareil électroménager de préparation culinaire selon l'une des revendications 1 à 5, **caractérisé en ce que** le bol (1) est en matériau métallique, comme de l'acier inoxydable, ou **en ce que** le bol (1) comprend un matériau métallique et un fond diffuseur comme un fond en aluminium.

7. Appareil électroménager de préparation culinaire selon l'une des revendications 1 à 6, **caractérisé en ce que** le socle (20) comprend une base (40) pour recevoir le bol (1), une colonne latérale (26) et une branche supérieure (25) pour venir au-dessus du bol (1).

8. Appareil électroménager de préparation culinaire selon la revendication 7, **caractérisé en ce que** le socle (20) comprend une partie supérieure (21) mobile en translation verticale par rapport à une partie inférieure (22), de sorte de pouvoir occuper une configuration rehaussée, dans laquelle le bol (1) peut être inséré ou retiré, et une configuration de fonctionnement.

9. Appareil électroménager de préparation culinaire selon l'une des revendications 1 à 8, **caractérisé en ce qu'**il comprend un dispositif chauffant disposé dans la base (40) du socle (20) ou fixé au couvercle technique (10) disposé au-dessus du bol (1).

## Patentansprüche

1. Elektrohaushaltsgerät zur Zubereitung von Speisen, vorgesehen für die Herstellung flüssiger Zubereitungen, insbesondere für die Herstellung von Sojamilch und/oder Suppen, mit einem Behälter (1), der abnehmbar auf einem Sockel (20) angeordnet ist, wobei der Behälter (1) mit einer Abdeckung mit technischen Funktionen (10) versehen ist, die eine Achse (12) trägt, die als Halterung und zur Betätigung eines Werkzeugs (15) dient, welches auf eine in den Behälter (1) eingegebene Mischung einwirken kann, wobei die Abdeckung mit technischen Funktionen (10) eine zweite Verriegelungsvorrichtung (11) aufweist, die mit der Achse (12) verbunden ist und über eine erste Verriegelungsvorrichtung (31) ausgelöst wird, mit Anordnung am Sockel (20), wobei die Abdeckung mit technischen Funktionen (10) über mindestens eine Einfüllöffnung (14) verfügt, die zugänglich ist, wenn der Behälter (1), auf den die Abdeckung mit technischen Funktionen (10) aufgesetzt ist, auf dem Sockel (20) platziert ist, **dadurch gekennzeichnet, dass** die Einfüllöffnung (14) gegenüber einer Öffnung (34) im oberen Arm (25) des Sockels angeordnet ist, um das Befüllen des Behälters (1) und/oder die Ableitung von Dämpfen zu ermöglichen.

2. Elektrohaushaltsgerät zur Zubereitung von Speisen nach Anspruch 1, **dadurch gekennzeichnet, dass** die Abdeckung mit technischen Funktionen (10) eine zweite Einfüllöffnung aufweist.

3. Elektrohaushaltsgerät zur Zubereitung von Speisen nach einem der Ansprüche 1 oder 2, **dadurch gekennzeichnet, dass** die Abdeckung mit technischen Funktionen (10) einen Filter (16) trägt, in dem sich das Werkzeug erstreckt (15).

4. Elektrohaushaltsgerät zur Zubereitung von Speisen nach Anspruch 3, **dadurch gekennzeichnet, dass** mindestens eine der Einfüllöffnungen (14) der Abdeckung mit technischen Funktionen (10) das Befüllen des Filters (16) ermöglicht.

5. Elektrohaushaltsgerät zur Zubereitung von Speisen nach einem der Ansprüche 1 bis 4, **dadurch gekennzeichnet, dass** die Achse (12) in Bezug auf die Mitte (C) des Behälters (1) exzentrisch versetzt angeordnet ist.

6. Elektrohaushaltsgerät zur Zubereitung von Speisen nach einem der Ansprüche 1 bis 5, **dadurch gekennzeichnet, dass** der Behälter (1) aus einem metallischen Werkstoff wie z. B. Edelstahl gefertigt ist, oder **dadurch gekennzeichnet, dass** der Behälter (1) einen metallischen Werkstoff und einen Diffusorboden wie z. B. einen Aluminiumboden umfasst.

7. Elektrohaushaltsgerät zur Zubereitung von Speisen nach einem der Ansprüche 1 bis 6, **dadurch gekennzeichnet, dass** der Sockel (20) eine Basis (40) umfasst, die der Aufnahme des Behälters (1) dient, sowie eine Seitenstütze (26) und einen oberen Arm (25) zur Überdeckung des Behälters (1).

8. Elektrohaushaltsgerät zur Zubereitung von Speisen nach Anspruch 7, **dadurch gekennzeichnet, dass** der Sockel (20) einen oberen Teil (21) umfasst, der gegen einen unteren Teil (22) vertikal beweglich gelagert ist, so dass er in eine erhöhte Stellung, in der der Behälter (1) eingesetzt oder entfernt werden kann, und in eine Betriebsstellung gebracht werden kann.

9. Elektrohaushaltsgerät zur Zubereitung von Speisen nach einem der Ansprüche 1 bis 8, **dadurch gekennzeichnet, dass** es eine Heizvorrichtung umfasst, die innerhalb der Basis (40) des Sockels (20) angeordnet oder an der Abdeckung mit technischen Funktionen (10) angebracht ist, die über dem Behälter (1) angeordnet ist.

## Claims

1. Food preparation household electrical appliance designed for the production of liquid preparations, especially for the manufacture of soy milk and/or soup, comprising a bowl (1) detachably arranged in a base (20), the bowl (1) being covered by a technical lid (10) carrying a shaft (12) for holding and actuating a tool (15) capable of acting on a mixture positioned within the bowl (1), the technical lid (10) having a second coupling device (11) connected to the shaft (12) and designed to be driven by a first coupling device (31) arranged in the base (20), the technical lid (10) comprising at least one filling opening (14) accessible when the bowl (1) carrying the technical lid (10) is in place in the base (20), **characterised in that** the filling opening (14) faces an opening (34) formed in an upper branch (25) of the base (20), to fill the bowl (1) and/or evacuate steam.

2. Food preparation household electrical appliance according to claim 1, **characterised in that** the technical lid (10) comprises a second filling opening.

3. Food preparation household electrical appliance according to claim 1 or 2, **characterised in that** the technical lid (10) carries a filter (16) in which the tool extends (15).

4. Food preparation household electrical appliance according to claim 3, **characterised in that** at least one of the filling openings (14) of the technical lid (10) can be used to fill the filter (16).

5. Food preparation household electrical appliance according to one of claims 1 to 4, **characterised in that** the shaft (12) is offset with respect to the centre (C) of the bowl (1).

6. Food preparation household electrical appliance according to one of claims 1 to 5, **characterised in that** the bowl (1) is made of a metallic material, such as stainless steel, or **in that** the bowl (1) comprises a metallic material and a diffuser bottom such as an aluminium bottom.

7. Food preparation household electrical appliance according to one of claims 1 to 6, **characterised in that** the base (20) comprises a support (40) to receive the bowl (1), a side column (26) and an upper branch (25) to come above the bowl (1).

8. Food preparation household electrical appliance according to claim 7, **characterised in that** the base (20) comprises an upper part (21) movable vertically with respect to a lower part (22), so that it can take up a raised configuration in which the bowl (1) can be inserted or removed, and an operating configuration.

9. Food preparation household electrical appliance according to one of claims 1 to 8, **characterised in that** it comprises a heating device arranged in the support (40) of the base (20) or attached to the technical lid (10) arranged above the bowl (1).
